# EUROPEAN PATENT APPLICATION

(11) **EP 4 628 290 A1**
(43) Date of publication of application: **08.10.2025**
(21) Application number: 22966677.1
(22) Date of filing: 28.11.2022
(51) Int. Cl.: B29C 73/02, B65D 23/00

(54) **SEALANT BOTTLE AND METHOD FOR REPAIRING TIRE**

(71) Applicant: Active Tools International (HK) Ltd., Hong Kong (HK)
(72) Inventor: HONG, Jui Hung Wesley, Hong Kong (CN); LAM, Koon Fung, Hong Kong (CN); CHING, Wai Kwong, Hong Kong (CN); HE, Min, Hong Kong (CN); LUO, Shixiong, Hong Kong (CN)
(74) Representative: Kaldewey, Tim Merlin
(86) International application number: PCT/CN2022/134572
(87) International publication number: WO 2024/113072

(57) **Abstract**

The present application discloses a sealant bottle and tire repair method. The sealant bottle comprises: a bottle body for receiving a sealant; a gas inlet conduit, wherein gas is able to enter the bottle body through the gas inlet conduit; a gas-liquid mixer comprising a gas inlet port for gas entry and a liquid inlet port for sealant entry, wherein a size ratio of the gas inlet port to the liquid inlet port is 2-27, and the gas-liquid mixer enables the gas and the sealant to be mixed into a mist-like mixture, the gas-liquid mixer further having an outlet port for the exit of the mist-like mixture; and a mixture outlet conduit, wherein the mist-like mixture mixed by the gas-liquid mixer is able to exit the bottle body through the mixture outlet conduit. The sealant bottle according to the present application can improve tire repairing efficiency.

## Description

### Technical Field

The present application pertains to the field of automobile maintenance, and specifically to a sealant bottle, as well as a tire repair method using such a sealant bottle.

### Background

During automobile operation, abnormal conditions such as tire under-inflation or damage may occasionally occur. In such cases, typically either a spare tire is used to replace an underinflated or damaged tire, or rapid tire repair and inflation are provided for the tire.

There exists a rapid tire repair method, wherein, upon tire puncture, the punctured part of a tire is repaired by injecting sealant into the tire.

Sealant is a macromolecular synthetic compound, typically stored in liquid form within a sealant bottle. When implementing the aforementioned tire repair method, air is first pumped into the sealant bottle, which in turn causes the sealant to be pumped out of the bottle and continuously into the tire. Upon entering the tire, the sealant impacts and mixes with surrounding air, expanding in volume into a foamy state. Once entering the tire, the foamed sealant can reach the punctured part and coat the inner wall of the tire to form a sealing film.

WO2022006805A1 discloses a sealant bottle designed so that, upon reaching a main inlet of a tire, sealant is already in a foam state and in considerable quantity, wherein tire repair requires a tire to be in a rolling condition.

US20190275756A1 discloses a method and device for sealing and inflating inflatable articles, wherein sealant is pumped in a passive manner. During tire inflation, the pressure in an air conduit will be higher than that of the sealant, causing the sealant in a sealant bottle to flow out very slowly or even not at all. The solution entails the specially made air compressor or specially adapted accessories. Meanwhile, the bottle directly contacts the hot air (~80°C or above) at or near the outlet nozzle of the air compressor, which potentially renders the glue susceptible to deterioration or even congealing.

### Summary

The present application provides a sealant bottle capable of improving tire repair efficiency.

According to one aspect of the present application, the sealant bottle is provided, comprising:
- a bottle body for receiving a sealant;
- a gas inlet conduit, wherein gas is able to enter the bottle body through the gas inlet conduit;
- a gas-liquid mixer having a gas inlet port for gas entry and a liquid inlet port for sealant entry, wherein a size ratio of the gas inlet port to the liquid inlet port is 2-27, and the gas-liquid mixer enables the gas and the sealant to be mixed into a mist-like mixture, the gas-liquid mixer further having an outlet port for the exit of the mist-like mixture; and
- a mixture outlet conduit, wherein the mist-like mixture mixed by the gas-liquid mixer is able to exit the bottle body through the mixture outlet conduit.

According to one aspect of the present application, the sealant bottle is provided, comprising a bottle cap for sealing the bottle body.

According to one aspect of the present application, the sealant bottle is provided, wherein the gas-liquid mixer is disposed in a receiving space defined by the bottle body and the bottle cap.

According to one aspect of the present application, the sealant bottle is provided, wherein:
- one end of the gas-liquid mixer is fixed to the bottle cap by ultrasonic welding;
- another end of the gas-liquid mixer is connected to a sealant tube; and
- the sealant contained in the bottle body is able to communicate with the liquid inlet port of the gas-liquid mixer through the sealant tube.

According to one aspect of the present application, the sealant bottle is provided, wherein:
- a sealant tube is provided in the bottle body; and
- the sealant contained in the bottle body is able to communicate with the liquid inlet port of the gas-liquid mixer through the sealant tube, the gas-liquid mixer being disposed in the sealant tube.

According to one aspect of the present application, the sealant bottle is provided, wherein a mixture tube is provided in the bottle body (1), the mixture tube being in communication with the outlet port of the gas-liquid mixer, and the gas-liquid mixer being disposed at one end of the mixture tube remote from the bottle cap.

According to one aspect of the present application, the sealant bottle is provided, wherein:
- the density of the gas-liquid mixer is less than the density of the sealant; and
- the mixture tube is at least partially flexibly constructed so as not to impede flotation of the gas-liquid mixer on the sealant.

According to one aspect of the present application, the sealant bottle is provided, wherein the gas-liquid mixer is structurally designed such that when floating on the sealant, the liquid inlet port is located below the liquid surface of the sealant and the gas inlet port is located above the liquid surface of the sealant.

According to one aspect of the present application, the sealant bottle is provided, wherein the density of the mixture tube is less than the density of the sealant.

According to one aspect of the present application, the sealant bottle is provided, wherein:
- the bottle cap contains a first conduit configured as a part of the gas inlet conduit or to communicate with the gas inlet conduit; and
- the bottle cap further contains a second conduit configured as a part of the mixture outlet conduit or to communicate with the mixture outlet conduit.

The present application further provides a tire repair method, wherein the sealant bottle mentioned above and compressed gas are used to repair a tire without rolling it.

Beneficial effects of the present application include: by providing the gas-liquid mixer and setting the size ratio of the gas inlet port to the liquid inlet port of the gas-liquid mixer to 2-27, the gas into the bottle body is enabled to be mixed with the sealant therein into a mist-like mixture, thereby reducing sealant consumption while enhancing sealing effectiveness.

### Brief Description of Drawings

The present disclosure will be described with reference to the drawings. It should be understood that the drawings are for illustrative purposes only and are not intended to limit the scope of protection of the present application. In the drawings, unless otherwise indicated, the same reference numeral refers to the same part.
- **FIG. 1** schematically shows a sealant bottle according to one embodiment of the present application;
- **FIG. 2** schematically shows a sealant bottle according to another embodiment of the present application;
- **FIG. 3** schematically shows a sealant bottle according to still another embodiment of the present application;
- **FIG. 4** schematically shows a sealant bottle according to yet another embodiment of the present application;
- **FIG. 5** schematically shows a gas-liquid mixer within a sealant bottle according to one embodiment of the present application.

### Detailed Description of Embodiments

As is easy to understand, according to the technical solution of the present application, those skilled in the art may propose various interchangeable structural modes and implementation modes without changing the essential spirit of the present application. As such, the following detailed embodiments and the accompanying drawings are merely exemplary illustrations of the technical solution of the present application, which should not be regarded as the entirety of the present application or as limitations or restrictions on the technical solution of the present application.

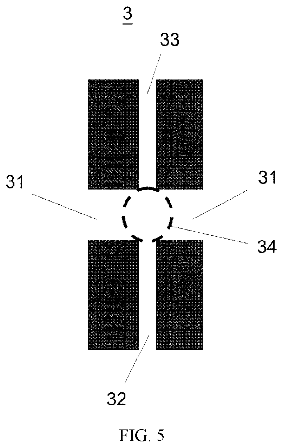

According to one embodiment of the present application, a sealant bottle comprises: a bottle body for receiving a sealant, wherein the bottle body, for example, can be made of glass or metal; a gas inlet conduit, through which gas is able to enter the bottle body; a gas-liquid mixer, wherein, referring to FIG. 5, the gas-liquid mixer 3 has a gas inlet port 31 for gas entry and a liquid inlet port 32 for sealant entry, and a size ratio of the gas inlet port to the liquid inlet port is 2-27. For example, the size ratio of the gas inlet port to the liquid inlet port is 2, 8, 8.1, 10, 25, 25.6, 26, 26.8, 27, etc. Through the gas-liquid mixer, the gas and the sealant can be mixed into a mist-like mixture, and the gas-liquid mixer further has an outlet port 33 for the exit of the mist-like mixture. The sealant bottle further comprises a mixture outlet conduit, through which the mist-like mixture mixed by the gas-liquid mixer is able to exit the bottle body.

In the sealant bottle according to this embodiment, by providing the gas-liquid mixer and by setting the size ratio of the gas inlet port to the liquid inlet port of the gas-liquid mixer to 2-27, the gas entering the bottle body can be mixed with the sealant in the bottle body into a mist-like mixture, which is then delivered to a tire to be repaired, thereby reducing sealant consumption while improving sealing effectiveness. In one repair process, sealant consumption can be reduced to, for example, 5-10g.

Previously, for the tire repair kits in the market, it is required that first pumping sealant into a tire, then starting the vehicle to roll the tire; the sealant in liquid form would subsequently flow to the damaged part and seal it.

Using the sealant bottle according to the embodiment allows a tire to be repaired without rolling it. For example, when a tire is mounted on a vehicle, the tire can be repaired without starting the vehicle and rolling the tire, especially along a road surface.

The sealant is pumped as an aerosol (mist-like mixture) that flows with compressed air and is carried by the air escaping from a puncture to the damaged area of the tire; upon arrival, the sealant rapidly congeals into a sealing gel, thereby substantially reducing the risk of driving on a damaged tire.

In the gas-liquid mixer, the liquid inlet port can be composed of one or more sub-liquid inlet ports, and the gas inlet port can also be composed of one or more sub-gas inlet ports. The size, for example, refers to cross-sectional area. If the liquid inlet port is composed of a plurality of sub-liquid inlet ports, the size of the liquid inlet port refers to the sum of the sizes of all the sub-liquid inlet ports; if the gas inlet port is composed of a plurality of sub-gas inlet ports, the size of the gas inlet port refers to the sum of the sizes of all the sub-gas inlet ports. The cross-sectional shape of the liquid inlet port/sub-liquid inlet port/gas inlet port/sub-gas inlet port can be circular, rectangular, or triangular, etc.

The gas-liquid mixer can be configured as spherical, cuboid, conical or cylindrical. Exemplarily, the gas-liquid mixer is configured as cylindrical, wherein the gas inlet port is composed of a plurality of sub-gas inlet ports symmetrically arranged in the radial direction of the cylinder, and the liquid inlet port consists of one sub-liquid inlet port located at the symmetrical center of the cylindrical gas-liquid mixer.

The gas inlet port, liquid inlet port, and outlet port of the gas-liquid mixer are not limited to the arrangement shown in FIG. 5; they can be interchanged or arranged in other positions as required.

The sealant bottle further comprises a bottle cap for sealing the bottle body. The bottle cap can contain a first conduit therein, wherein the first conduit can be configured as a part of the gas inlet conduit or to communicate with the gas inlet conduit, enabling the gas to enter the bottle body; the bottle cap can contain a second conduit, wherein the second conduit can be configured as a part of the mixture outlet conduit or to communicate with the mixture outlet conduit, enabling the mist-like mixture to exit the bottle body and subsequently be delivered to the tire to be repaired.

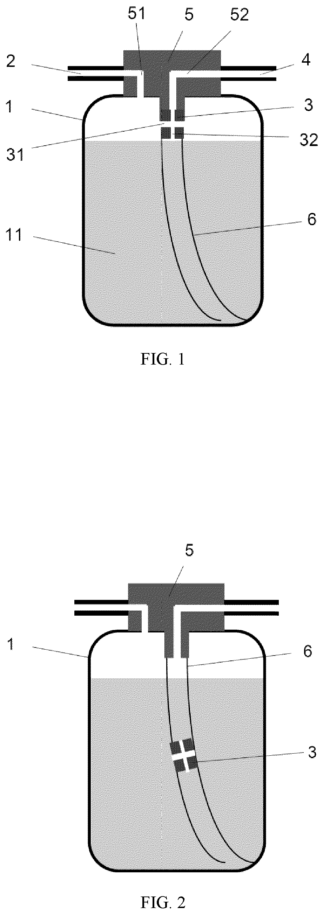

In the embodiment shown in FIG. 1, the gas-liquid mixer 3 is disposed in a receiving space defined by the bottle body 1 and the bottle cap 5. One end of the gas-liquid mixer 3 is fixed to the bottle cap 5 by ultrasonic welding, for example, fixed to the bottom of the bottle cap 5, thereby establishing a high-quality connection and obtaining a reliable seal between the gas-liquid mixer 3 and the bottle cap 5 in a simple, efficient, and low-cost manner; the outlet port 33 of the gas-liquid mixer 3 is in communication with a second conduit 52 in the bottle cap 5; another end of the gas-liquid mixer 3 is connected to a sealant tube 6, and the sealant 11 (as shown by the dark area in the figure) contained in the bottle body 1 can communicate with the liquid inlet port 32 of the gas-liquid mixer 3 through the sealant tube 6. One end of the sealant tube 6 remote from the gas-liquid mixer 3 (i.e., free end) extends to the bottom of the bottle body 1.

The ratio of the inner diameter of the sealant tube 6 to the inner diameter of the liquid inlet port 32 is 1-5.7, for example, 1, 4.4 and 5.7. The sealant tube 6 can be a capillary tube with an inner diameter greater than 0.5 mm.

In the embodiment shown in FIG. 1, an exemplary operating process of the sealant bottle is as follows: The gas (e.g., high-pressure gas) from the gas inlet conduit 2 flows through the first conduit 51 in the bottle cap 5 and then enters the receiving space defined by the bottle body 1 and the bottle cap 5; on one hand, the gas enters the gas-liquid mixer 3 from the gas inlet port 31 of the gas-liquid mixer 3, and on the other hand, the sealant (e.g., in liquid form) enters the liquid inlet port 32 of the gas-liquid mixer 3 through the sealant tube 6 by the pressure effect of the gas; the gas and the sealant are mixed into a mist-like mixture in a mixing zone 34 (refer to the dashed line in FIG. 5) in the gas-liquid mixer 3 and are discharged through the outlet port 33 of the gas-liquid mixer 3; the mist-like mixture discharged from the gas-liquid mixer 3 passes through the second conduit 52 within the bottle cap 5 into the mixture outlet conduit 4, and is subsequently delivered to the tire to be repaired; upon entering a damaged tire, the mist-like mixture containing the sealant will automatically flow to the damaged part of the tire along with the air escaping the tire and will accumulate and solidify there, with the sealant accumulating more and more until the damaged part of the tire is completely sealed.

Table 1 shows multiple sets of comparative test data. Test Nos. 1-11 adopt the sealant bottle according to the embodiment in FIG. 1 for tire repair; in contrast, Test No. 0 uses a traditional tire repair method. Therein, "Not detected" refers to a leakage rate of less than 0.001 bar/min, "Low temp" refers to -30°C, and "High temp" refers to 70°C. As shown by the comparison in Table 1, using the sealant bottle according to the embodiment in FIG. 1 for tire repair can achieve a superior tire sealing effect with a smaller sealant dosage.

**Table 1**

| **Tes t No.** | **Air/Sealant Ratio** | **Sealant Dosage** | **Damage Leakage Rate** | **Static Leakage Rate** | **Vehicle Test - First 5km** | | |
|---|---|---|---|---|---|---|---|
| | area/area | g | bar/min | bar/min | leakage rate | damaged part | temperature (°C) |
| 0 | - | 300 | 0.678 | - | Not detected | Shoulder | Room temp |
| 1 | 2.0 | 200 | 0.438 | 0.012 | Not detected | Shoulder | Room temp |
| 2 | 5.0 | 150 | 0.509 | 0.016 | Not detected | Shoulder | Room temp |
| 3 | 7.2 | 100 | 0.558 | 0.014 | Not detected | Tread | Room temp |
| 4 | 7.2 | 50 | 0.524 | 0.006 | Not detected | Shoulder | Room temp |
| 5 | 7.2 | 10 | 0.676 | 0.002 | Not detected | Shoulder | Room temp |
| 6 | 7.2 | 5 | 0.579 | 0.014 | Not detected | Shoulder | Room temp |
| 7 | 8.1 | 200 | 0.662 | 0.008 | Not detected | Shoulder | Room temp |
| 8 | 8.1 | 150 | 0.634 | 0.016 | Not detected | Shoulder | Low temp |
| 9 | 8.1 | 150 | 0.500 | 0.016 | Not detected | Shoulder | High temp |
| 10 | 10.0 | 200 | 0.579 | 0.008 | Not detected | Shoulder | Room temp |
| 11 | 26.8 | 150 | 0.509 | 0.004 | Not detected | Shoulder | Room temp |

In the embodiment shown in FIG. 2, the sealant tube 6 is provided in the bottle body 1, the sealant contained in the bottle body 1 can communicate with the liquid inlet port 32 of the gas-liquid mixer 3 through the sealant tube 6, and the gas-liquid mixer 3 is disposed in the sealant tube 6. One end of the sealant tube 6 is in communication with the second conduit 52 within the bottle cap 5, while the other end of the sealant tube 6 extends to the bottom of the bottle body 1.

The gas-liquid mixer 3 can be integrally constructed with the sealant tube 6; alternatively, the gas-liquid mixer 3 can be constructed separately from the sealant tube 6, in which case the sealant tube 6 has an opening at the gas-liquid mixer 3 such that the gas inlet port 31 of the gas-liquid mixer 3 can communicate with the exterior. The sealant tube 6 can be configured as multiple tubes, i.e., the sealant tube is composed of a plurality of sub-tubes.

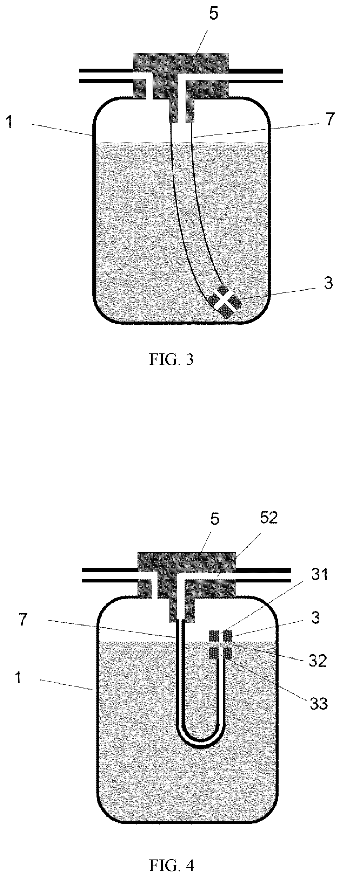

In the embodiment shown in FIG. 3, a mixture tube 7 is provided in the bottle body 1, the mixture tube 7 being in communication with the outlet port 33 of the gas-liquid mixer 3, and the gas-liquid mixer 3 being disposed at one end of the mixture tube 7 remote from the bottle cap 5 (i.e., free end). The other end of the mixture tube 7 remote from the gas-liquid mixer 3 (i.e., fixed end) is in communication with the second conduit 52 in the bottle cap 5. The mixture tube 7 can be rigidly or flexibly constructed.

In the embodiments shown in FIG. 2 and FIG. 3, the sealant can be supplied to a tire to be repaired in liquid and mist-like mixture form, thereby enabling tire repair with sealant in multiple forms to meet various application scenarios; furthermore, for example, by tilting or inverting the bottle body and/or the sealant tube, the ratio of the sealant in liquid form to the sealant as the mist-like mixture can be controlled, and the sealant can even be supplied entirely as the mist-like mixture to the tire to be repaired, thereby achieving the best sealing effectiveness in an optimal manner.

In the embodiment shown in FIG. 4, similarly to the embodiment in FIG. 3, a mixture tube 7 is provided in the bottle body 1, the mixture tube 7 being in communication with the outlet port 33 of the gas-liquid mixer 3, and the gas-liquid mixer 3 being disposed at one end of the mixture tube 7 remote from the bottle cap 5. The other end of the mixture tube 7 remote from the gas-liquid mixer 3 is in communication with the second conduit 52 in the bottle cap 5. Furthermore, the gas-liquid mixer 3 floats on the sealant. The density of the gas-liquid mixer 3 is less than the density of the sealant (e.g., less than 1g/cm³), and the mixture tube 7 is at least partially flexibly constructed so as not to impede flotation of the gas-liquid mixer 3 on the sealant. In this way, regardless of the angle at which the bottle body 1 is positioned (the bottle body 1 standing upright on the ground is 0 degrees, and the bottle body 1 can be inverted to any angle, e.g., 90 degrees, 135 degrees, or 180 degrees), the gas-liquid mixer 3 always floats on the sealant, and gas can unimpededly enter the gas-liquid mixer 3 from the gas inlet port 31 of the gas-liquid mixer 3, thereby stably generating the mist-like mixture.

Furthermore, the gas-liquid mixer 3 is structurally designed such that when floating on the sealant, the liquid inlet port 32 is located below the liquid surface of the sealant and the gas inlet port 31 is located above the liquid surface of the sealant. This can be achieved, for example, by adjusting a weight distribution of the gas-liquid mixer 3. In this way, a stable ratio of the gas to the sealant in the mist-like mixture mixed by the gas-liquid mixer 3 can always be maintained.

Exemplarily, the density of the mixture tube 7 is less than the density of the sealant (e.g., less than 1g/cm³). The mixture tube 7 is, for example, made of a lightweight material, thus not impeding flotation of the gas-liquid mixer 3 on the sealant and even providing additional buoyancy to assist its flotation.

The gas-liquid mixer 3 can be made of metal, plastic, or a combination thereof. For example, in the embodiment shown in FIG. 3, the gas-liquid mixer 3 can be made of metal, facilitating sinking; in the embodiment shown in FIG. 4, the gas-liquid mixer 3 can be made of plastic, facilitating flotation.

According to one technical solution of the present application, it is not necessary to use a specially made compressor or specially adapted accessories; and the position of the gas-liquid mixer can be varied as required (e.g., near the bottle cap, integral with the bottle cap, at the bottom, etc.). Meanwhile, the bottle body will not directly contact hot air at or near an outlet nozzle of an air compressor, which precludes the sealant from deteriorating or even congealing.

The present invention also includes a tire repair method that employs any of the aforementioned sealant bottles to repair a tire, thereby its technical features and effects correspond to the preceding description and therefore will not be repeated herein.

In the tire repair method, a tire is repaired without rolling it. For example, when a tire is mounted on a vehicle, the tire can be repaired without starting the vehicle and rolling the tire, especially along a road surface.

An exemplary operating process of the tire repair method is as follows: compressed gas generated by an air compressor enters the sealant bottle through the gas inlet conduit, the compressed gas mixes with the sealant in the sealant bottle to form a mist-like mixture (possibly containing a small amount of foam and liquid), which exits the sealant bottle through the mixture outlet conduit, and is then delivered to a tire to be repaired, subsequently forming a sealing gel at the damaged part of the tire.

The technical scope of the present application is not merely limited to the content of the above description. Those skilled in the art can make various transformations and modifications to the above embodiments without departing from the technical concept of the present application, and the transformations and modifications should all fall within the scope of protection of the present application.

## Claims

1. A sealant bottle, wherein the sealant bottle comprises:
• a bottle body (1) for receiving a sealant;
• a gas inlet conduit (2), wherein gas is able to enter the bottle body (1) through the gas inlet conduit (2);
• a gas-liquid mixer (3) having a gas inlet port (31) for gas entry and a liquid inlet port (32) for sealant entry, wherein a size ratio of the gas inlet port (31) to the liquid inlet port (32) is 2-27, and the gas-liquid mixer (3) enables the gas and the sealant to be mixed into a mist-like mixture, the gas-liquid mixer (3) further having an outlet port (33) for the exit of the mist-like mixture; and
• a mixture outlet conduit (4), wherein the mist-like mixture mixed by the gas-liquid mixer (3) is able to exit the bottle body (1) through the mixture outlet conduit (4).

2. The sealant bottle according to claim 1, wherein the sealant bottle comprises a bottle cap (5) for sealing the bottle body (1).

3. The sealant bottle according to claim 1, wherein the gas-liquid mixer (3) is disposed in a receiving space defined by the bottle body (1) and the bottle cap (5).

4. The sealant bottle according to claim 3, wherein:
• one end of the gas-liquid mixer (3) is fixed to the bottle cap (5) by ultrasonic welding;
• another end of the gas-liquid mixer (3) is connected to a sealant tube (6); and
• the sealant contained in the bottle body (1) is able to communicate with the liquid inlet port (32) of the gas-liquid mixer (3) through the sealant tube (6).

5. The sealant bottle according to claim 3, wherein:
• a sealant tube (6) is provided in the bottle body (1); and
• the sealant contained in the bottle body (1) is able to communicate with the liquid inlet port (32) of the gas-liquid mixer (3) through the sealant tube (6), the gas-liquid mixer (3) being disposed in the sealant tube (6).

6. The sealant bottle according to claim 3, wherein a mixture tube (7) is provided in the bottle body (1), the mixture tube (7) being in communication with the outlet port (33) of the gas-liquid mixer (3), and the gas-liquid mixer (3) being disposed at one end of the mixture tube (7) remote from the bottle cap (5).

7. The sealant bottle according to claim 6, wherein:
• the density of the gas-liquid mixer (3) is less than the density of the sealant; and
• the mixture tube (7) is at least partially flexibly constructed so as not to impede flotation of the gas-liquid mixer (3) on the sealant.

8. The sealant bottle according to claim 7, wherein the gas-liquid mixer (3) is structurally designed such that when floating on the sealant, the liquid inlet port (32) is located below the liquid surface of the sealant and the gas inlet port (31) is located above the liquid surface of the sealant.

9. The sealant bottle according to claim 7, wherein the density of the mixture tube (7) is less than the density of the sealant.

10. The sealant bottle according to claim 1, wherein the gas-liquid mixer (3) is made of metal or plastic.

11. The sealant bottle according to claim 2, wherein:
• the bottle cap (5) contains a first conduit (51) configured as a part of the gas inlet conduit (2) or to communicate with the gas inlet conduit (2); and
• the bottle cap (5) further contains a second conduit (52) configured as a part of the mixture outlet conduit (4) or to communicate with the mixture outlet conduit (4).

12. The sealant bottle according to claim 4, wherein the ratio of an inner diameter of the sealant tube (6) to an inner diameter of the liquid inlet port (32) is 1-5.7.

13. A tire repair method, wherein the sealant bottle according to any one of claims 1 to 12 and compressed gas are used to repair a tire without rolling it.
